# EUROPÄISCHE PATENTSCHRIFT

(11) **EP 4 166 832 B1**
(45) Veröffentlichungstag und Bekanntmachung des Hinweises auf die Patenterteilung: **05.06.2024**
(21) Anmeldenummer: 22201518.2
(22) Anmeldetag: 14.10.2022
(51) Int. Cl.: F16L 9/18, F16L 9/19

(54) **ROHRLEITUNGSSYSTEM SOWIE VERFAHREN ZUM TRANSPORT VON WASSERSTOFF**
PIPELINE SYSTEM AND METHOD FOR TRANSPORTING HYDROGEN
SYSTÈME DE TUYAUTERIE ET PROCÉDÉ DE TRANSPORT D'HYDROGÈNE

(30) Priorität: 14.10.2021 EP 21202649
(43) Veröffentlichungstag der Anmeldung: 19.04.2023
(73) Patentinhaber: HABAU Hoch-u. Tiefbaugesellschaft m.b.H., 4320 Perg (AT)
(72) Erfinder: DRAGAN, Harald, 2202 Königsbrunn (AT)
(74) Vertreter: KLIMENT & HENHAPEL

(56) Entgegenhaltungen:
- DE-A1- 3 135 983
- US-A- 3 777 502
- US-A1- 2004 084 083

## Beschreibung

### GEBIET DER ERFINDUNG

Die Erfindung betrifft ein Rohrleitungssystem zum Transport von Wasserstoff, wobei das Rohrleitungssystem ein Außenrohr mit einem lichten Außenrohrdurchmesser sowie ein erstes Innenrohr mit einem lichten Innenrohrdurchmesser umfasst, wobei das erste Innenrohr einen im Vergleich zum lichten Außenrohrdurchmesser kleineren lichten Innenrohrdurchmesser aufweist sowie innerhalb des Außenrohrs geführt ist. Das Außenrohr enthält ein fluides Außenrohr-Medium und ist mit einem Außenrohrdruck beaufschlagt, und das erste Innenrohr enthält ein fluides Innenrohr-Medium und ist mit einem Innenrohrdruck beaufschlagt, wobei das Innenrohr-Medium Wasserstoff enthält oder Wasserstoff ist.

Außerdem betrifft die Erfindung ein Verfahren zum Transport von Wasserstoff mit einem solchen Rohrleitungssystem.

### STAND DER TECHNIK

Rohrleitungen zum Transport von Wasserstoff werden üblicherweise verwendet, um den gegenwärtig meist dezentral in großen Produktionseinheiten produzierten Wasserstoff an den oftmals weit entfernten Ort eines Verbrauchers zu fördern.

Bei herkömmlichen Rohrleitungen insbesondere aus Metall, in denen Wasserstoff transportiert wird, treten allerdings regelmäßig Materialprobleme aufgrund von Wasserstoffversprödung und wasserstoffinduzierter Korrosion auf, da Wasserstoff mit Metallen chemisch und physikalisch reagiert. Unter dem Begriff "Wasserstoffversprödung" versteht man die Änderung der Sprödigkeit, die durch das Eindringen und die Einlagerung von Wasserstoff in ein Metallgitter verursacht wird. Wasserstoff hat ein aktives Elektron und kann daher als kleinstes Molekül leicht in die Kristallstruktur der meisten Metalle migrieren. Da Wasserstoff schon bei niedrigen Temperaturen eine hohe Diffusionsgeschwindigkeit aufweist, ist es möglich, den Wasserstoff bei Temperaturen von bis zu 200°C aus Stahl ohne metallurgische Veränderungen auszutreiben.

Wasserstoff kann somit aufgrund der großen Permeabilität bzw. hohen Durchlässigkeit von Stahl gegenüber Wasserstoff durch herkömmliche Stahlrohre diffundieren, weshalb es zu unerwünschten Durchtrittsverlusten von Wasserstoff beim Transport in herkömmlichen Stahlrohren kommt. Blanker Stahl ist aufgrund des Fehlens einer entsprechenden Oxidschicht ebenfalls nicht für den Transport von Wasserstoff geeignet, da es zur Versprödung des Stahls kommt und somit Bruchgefahr infolge von Spannungskorrosionsrissen beim Einsatz von herkömmlichen Stahlrohren für den Wasserstofftransport besteht.

Aus Sicherheitsgründen ist der direkte Transport von Wasserstoff in bestehenden Erdgasrohrleitungen bzw. Erdgas-Pipelines, die üblicherweise aus Stahl gefertigt sind, daher nicht möglich. In herkömmlichen Erdgasleitungen können nur geringe Anteile an Wasserstoff vermischt im Erdgas transportiert werden. Der Anteil der Beimischung von Wasserstoff im Erdgas ist allerdings auf wenige Prozent, jedenfalls im einstelligen Prozentbereich, beschränkt.

Es bietet sich zwar an, auf bereits bestehende Erdgasleitungen auch für den Transport von Wasserstoff in höheren Konzentrationen zurückzugreifen. Dazu müssen jedoch die herkömmlichen Stahlrohre von bestehenden Erdgasleitungen ausgebaut und gegen neue Rohre, die für den Transport von Wasserstoff besser geeignet sind, getauscht werden. Der Austausch von Bestandsrohren zur Umrüstung als Wasserstoffrohrleitung ist allerdings sehr kosten-, ressourcen- und zeitintensiv. Des Weiteren ist ein Austausch bzw. Neubau von Erdgasleitungen üblicherweise mit umfangreichen, oft jahrelangen Behördenverfahren samt einer damit einhergehenden Umweltverträglichkeitsprüfung (UVP) verbunden.

Aus dem Stand der Technik ist es bereits bekannt, bestehende Erdgasleitungen für den Transport von Wasserstoff umzurüsten, indem ein Innenrohr in das Bestandsrohr eingezogen wird, wobei in diesem Innenrohr Wasserstoff transportiert werden kann. Bestehende Erdgasleitungen bzw. Erdgas-Pipelines können solcherart relativ rasch zum Wasserstofftransport ertüchtigt werden, da die Innenrohrleitung mit an sich bekannten Inliner-Verfahren in das Außenrohr der Bestandsleitung eingebracht werden kann. Der Transport von Wasserstoff wird deshalb sicherer, da konzentrierter Wasserstoff nicht mehr direkt zur Stahloberfläche an der Innenwandung des bestehenden Außenrohrs gelangen und es daher zu keiner Stahlversprödung des Außenrohrs kommen kann. Ein teures und sehr aufwendiges Abtrennverfahren mittels Methanisierung oder Membrantrennverfahren, um den dem Erdgas zuvor beigemischten Wasserstoff aus dem bisher in Erdgasleitungen transportiertem Erdgas wieder abzutrennen, wird somit obsolet.

Beispielsweise ist aus der US 2004/0084083 A1 ein solches Rohrsystem bekannt geworden, bei dem in einem inneren Rohr ein nichtodoriertes Gas, beispielsweise Wasserstoff, transportiert werden kann, wobei das innere Rohr durch das äußere Rohr geführt wird. Im äußeren Rohr wird ein odoriertes Gas, beispielsweise Erdgas, geführt. Der Druck im inneren Rohr ist dabei größer als der im äußeren Rohr, um gegebenenfalls Verunreinigungen im nichtodorierten Gas bzw. Wasserstoff zu vermeiden. Konkrete Angaben zu Rohrleitungsmaterialien, die für den direkten Kontakt mit bzw. den Transport von Wasserstoff geeignet sind, um einerseits eine Wasserstoffversprödung und andererseits unerwünschte Durchtrittsverluste von Wasserstoff durch das Rohrleitungsmaterial möglichst zu verhindern, fehlen jedoch in der US 2004/0084083 A1.

Außerdem ist an dieser Ausführung nachteilig, dass Wasserstoff weiterhin aufgrund der Druckdifferenz bzw. des gewählten Druckgefälles in Richtung vom inneren Rohr mit dem darin herrschenden höheren Druck durch das Innenrohr hindurch zum äußeren Rohr mit dem darin herrschenden niedrigeren Druck entweichen kann. Es kommt somit auch bei der in US 2004/0084083 A1 vorgeschlagenen Ausführung weiterhin zu unerwünschten Wasserstoffverlusten in das Erdgas im äußeren Rohr.

### AUFGABE DER ERFINDUNG

Es ist daher Aufgabe der Erfindung, die Nachteile des Stands der Technik zu überwinden und ein verbessertes Rohrleitungssystem, das zum Transport von Wasserstoff geeignet ist, anzugeben, mit dem die Transportsicherheit von Wasserstoff weiter erhöht wird und bei dem unerwünschte Wasserstoffverluste aufgrund von Diffusion durch die Leitungswandungen möglichst reduziert werden. Überdies soll im Rahmen der Erfindung ein Verfahren zum Transport von Wasserstoff mit einem solchen Rohrleitungssystem angegeben werden.

### DARSTELLUNG DER ERFINDUNG

Diese Aufgabe wird bei einem eingangs genannten, gattungsgemäßen Rohrleitungssystem zum Transport von Wasserstoff erfindungsgemäß dadurch gelöst, dass der Außenrohrdruck im Außenrohr größer ist als der Innenrohrdruck im ersten Innenrohr.

Die erfindungsgemäße Ausführung eines Rohrleitungssystems zum Transport von Wasserstoff bietet den Vorteil, dass aufgrund der gewählten Druckdifferenz zwischen dem größeren Außenrohrdruck und dem im Vergleich dazu kleineren Innenrohrdruck ein Druckgefälle vom Außenrohr in Richtung des innerhalb des Außenrohrs angeordneten ersten Innenrohrs erzeugt wird, welches Druckgefälle einem unerwünschten Austritt des fluiden Innenrohr-Mediums aus dem Innenrohr in das umgebende Außenrohr entgegenwirkt. Beim Einsatz von Wasserstoff, vorzugsweise von Wasserstoff in konzentrierter Form oder als reiner Wasserstoff, als Innenrohr-Medium wirkt die aufgeprägte Druckdifferenz bzw. das Druckgefälle mit einem Außenrohrdruck im Außenrohr, der größer ist als der Innenrohrdruck im ersten Innenrohr, unerwünschten Durchtrittsverlusten von Wasserstoff durch die Wandungen des Innenrohrs entgegen. Bei Einsatz eines für Wasserstoff geeigneten Innenrohrmaterials kann mit einem erfindungsgemäßen Rohrleitungssystem somit der Durchtritt von Wasserstoff durch das erste Innenrohr hindurch zumindest reduziert oder möglichst verhindert werden.

Damit einhergehend wird mit dem erfindungsgemäßen Rohrleitungssystem auch die Transportsicherheit erhöht, denn beim Transport von Wasserstoff, insbesondere von Wasserstoff in konzentrierter Form oder als reiner Wasserstoff, als Innenrohr-Medium wird auch im Fall von etwaigen Rissen oder Leckagen des ersten Innenrohrs aufgrund des vergleichsweise größeren Außenrohrdrucks ein Austritt von Wasserstoff aus dem Innenrohr ins Außenrohr möglichst vermieden.

Generell werden in der Physik Gase und Flüssigkeiten unter dem Begriff "Fluide" zusammengefasst. Die hier gewählten Begriffe "fluides Innenrohr-Medium" sowie "fluides Außenrohr-Medium" umfassen jeweils sowohl gasförmige Medien, als auch flüssige Medien.

Zweckmäßig kann das erste Innenrohr mittels entsprechender Abstandhalter innerhalb des Außenrohrs geführt werden. Bedarfsweise können auch mehrere Innenrohre als Innenrohrbündel innerhalb des Außenrohrs geführt werden. Die Dimension des ersten Innenrohrs und gegebenenfalls die jeweiligen Dimensionen eines weiteren zweiten oder dritten Innenrohrs können dabei variabel an die jeweiligen Erfordernisse eines erfindungsgemäßen Rohrleitungssystems angepasst werden.

Besonders vorteilhaft kann es sein, wenn bei einem erfindungsgemäßen Rohrleitungssystem der Außenrohrdruck um zumindest 1 bar größer ist als der Innenrohrdruck im ersten Innenrohr. In Vorversuchen hat sich gezeigt, dass eine Druckdifferenz von zumindest 1 bar, um die der Außenrohrdruck größer als der Innenrohrdruck ist, ausreichend sein kann, um je nach gewähltem Innenrohrmaterial beim Einsatz von Wasserstoff als Innenrohr-Medium unerwünschte Durchtrittsverluste von Wasserstoff durch die Wandungen des Innenrohrs möglichst zu vermeiden.

In einer weiteren vorteilhaften Ausführung der Erfindung kann bei einem Rohrleitungssystem der Außenrohrdruck von 1 bar bis 10 bar, vorzugsweise von 1 bar bis 5 bar, besonders bevorzugt von 1 bar bis 2 bar, größer sein als der Innenrohrdruck im ersten Innenrohr. Je kleiner die Druckdifferenz zwischen dem Außenrohrdruck und dem Innenrohrdruck ausgewählt wird, umso geringer ist damit einhergehend die mechanische Belastung, die aufgrund des Überdrucks im Außenrohr auf das entsprechende Innenrohrmaterial wirkt. Die hier genannten, bevorzugten Druckdifferenzen von bis zu 10 bar erlauben es, auch solche Innenrohrmaterialien zu verwenden, die zwar möglichst gut für den Kontakt mit Wasserstoff geeignet sind, die bei Kontakt mit Wasserstoff nicht verspröden, möglichst niedrige Permeationsraten für Wasserstoff aufweisen und somit möglichst diffusionsdicht für Wasserstoff sind, die jedoch an sich nicht druckbeständig und daher nicht für Hochdruckanwendungen geeignet sind. So können beispielsweise Kunststoffrohre bzw. Leitungsrohre aus polymeren Werkstoffen als Innenrohre innerhalb eines erfindungsgemäßen Rohrleitungssystems eingesetzt werden, da diese im laufenden Betrieb des Rohrleitungssystems bloß einer vergleichsweise geringen Druckdifferenz zwischen dem höheren Außenrohrdruck und dem niedrigeren Innenrohrdruck widerstehen müssen.

Polymere Werkstoffe haben gegenüber Metallen den Vorteil, dass es bei Kontakt mit Wasserstoff zu keiner Wasserstoffversprödung kommt. Zwar kann Wasserstoff auch in polymere Werkstoffe hineindiffundieren oder durch diese hindurch permeieren, doch ist damit keine Schädigung oder Veränderung der mechanischen oder chemischen Eigenschaften von polymeren Werkstoffen verbunden. Die Permeabilität bei Kunststoffen basiert auf der Beweglichkeit der Polymerketten. Je steifer diese sind bzw. je höher vernetzt die Polymerketten sind, desto undurchlässiger ist das Polymermaterial und desto geringer ist dessen Permeabilität gegenüber Wasserstoff.

Unter Voraussetzung der geeigneten Werkstoffauswahl eines entsprechenden Innenrohrmaterials kann es demnach besonders vorteilhaft sein, wenn bei einem erfindungsgemäßen Rohrleitungssystem der Außenrohrdruck von 1 bar bis 2 bar größer ist als der Innenrohrdruck im ersten Innenrohr. In dieser besonders bevorzugten Variante der Erfindung kann das Innenrohr besonders schonend bei vergleichsweise moderatem Überdruck von 1 bar bis 2 bar, der im umgebenden Außenrohr herrscht, innerhalb des Außenrohrs der Rohrleitung geführt werden. Die aufgeprägte Druckdifferenz im laufenden Betrieb des Rohrleitungssystems wirkt der Permeabilität von Wasserstoff durch das jeweilige Innenrohrmaterial entgegen, wodurch unerwünschte Durchtrittsverluste von Wasserstoff durch das Innenrohrmaterial hindurch möglichst verhindert werden können.

Zweckmäßig kann bei einem erfindungsgemäßen Rohrleitungssystem der absolute Außenrohrdruck größer als 50 bar, vorzugsweise größer als 90 bar, besonders bevorzugt größer als 100 bar, sein. Die hier angegebenen Druckniveaus entsprechen jenen von bestehenden Erdgasleitungen bzw. Erdgaspipelines. So liegt der absolute Leitungsdruck von bestehenden Erdgasleitungen aus Sibirien nach Europa nach Kenntnisstand der Anmelderin etwa bei 98 bar und kann in Hochdruckleitungen bis zu 200 bar betragen. Bei einer erfindungsgemäßen Rohrleitung ist der Innenrohrdruck innerhalb eines Innenrohres dabei jedenfalls kleiner als der entsprechende Außenrohrdruck im Außenrohr.

In einer weiteren zweckmäßigen Ausführung des Rohrleitungssystems gemäß der Erfindung kann das Innenrohr parallel mit dem Außenrohr, vorzugsweise konzentrisch mit dem Außenrohr, geführt sein. Zweckmäßig wird das Innenrohr bzw. ein erstes Innenrohr innerhalb des Außenrohres parallel mit dem Außenrohr geführt, um einen direkten Wandkontakt zwischen dem Innenrohr und dem Außenrohr zu vermeiden. Damit wird ein entsprechender Gaspolster des fluiden Außenrohr-Mediums mit gleichmäßigen Druckverhältnissen um den gesamten Umfang des Innenrohres gewährleistet. In einer besonders bevorzugten Ausführungsvariante kann ein einziges Innenrohr auch so mittels entsprechender Abstandhalter innerhalb des Außenrohrs geführt sein, dass das Innenrohr konzentrisch mit dem Außenrohr positioniert ist. In diesem besonders bevorzugten Fall weist ein Ringspalt zwischen dem Außenrohr und dem Innenrohr jeweils dieselbe Spaltbreite auf. Das Innenrohr ist dabei innerhalb des Außenrohres besonders sicher gelagert, da der Abstand zwischen dem Innenrohr und dem umgebenden Außenrohr jeweils möglichst groß ist.

Beim erfindungsgemäßen Rohrleitungssystem enthält das fluide Innenrohr-Medium Wasserstoff oder ist Wasserstoff. Vorteilhaft ist das erfindungsgemäße Rohrleitungssystem nicht auf den Transport von einem Trägermedium wie beispielsweise Erdgas, dem Wasserstoff bloß in geringen Mengen beigemischt ist, beschränkt. Sondern mit dem erfindungsgemäßen Rohrleitungssystem ist es aufgrund des gewählten Druckgefälles bei größerem Außenrohrdruck möglich, auch reinen Wasserstoff oder Wasserstoff in höherer Konzentration im Innenrohr bei einem vergleichsweise etwas kleineren Innenrohrdruck als dem Außenrohrdruck sicher und möglichst verlustfrei zu transportieren.

Der Vollständigkeit halber wird festgehalten, dass es mit dem erfindungsgemäßen Rohrleitungssystem, welches für den Wasserstofftransport im ersten Innenrohr und/oder gegebenenfalls in weiteren Innenrohren ausgelegt ist, auch möglich ist, andere fluide Medien wie beispielsweise Kohlendioxid (CO₂) zu befördern. Beispielsweise kann Kohlendioxid einem fluiden Außenrohr-Medium beigemischt sein oder aber selbst das fluide Außenrohr-Medium bilden. Ebenso ist es denkbar, dass Kohlendioxid in beliebigem Verhältnis dem Wasserstoff im ersten Innenrohr beigemischt wird oder aber beispielsweise als weiteres Innenrohr-Medium in einem eigenen, zweiten Innenrohr befördert wird.

Beim Transport von Kohlendioxid ist jedoch generell zu beachten, dass es sich dabei um ein saures Medium handelt, welches die Korrosion von herkömmlichen Rohrleitungen aus Metall beschleunigt. Um unerwünschte Korrosion von Rohrleitungen beim Transport von Medien, die Kohlendioxid in höherer Konzentration enthalten oder Kohlendioxid sind, möglichst zu vermeiden, ist es vorteilhaft, wenn mit Kohlendioxid in Kontakt stehende Rohrleitungsabschnitte entweder aus einem hochlegierten, korrosionsbeständigen bzw. säurebeständigen Stahl, beispielsweise aus austenitischem Stahl, hergestellt sind und/oder innenseitig mit einer geeigneten säurebeständigen Beschichtung ausgerüstet sind. Als mögliche Beschichtungswerkstoffe können beispielsweise nichtmetallische, polymere Werkstoffe eingesetzt werden. Beispielsweise können hochvernetzte, säurebeständige Polymere als Linermaterial zur Innenbeschichtung von mit Kohlendioxid beaufschlagten Rohrleitungsabschnitten dienen. Für den Fall, dass Kohlendioxid in höherer Konzentration als Außenrohr-Medium in einem erfindungsgemäßen Rohrleitungssystem transportiert werden soll, so ist dabei zu beachten, dass das zumindest eine Innenrohr oder die mehreren Innenrohre, das bzw. die innerhalb des Außenrohrs geführt wird bzw. werden, jeweils auch an ihren Rohraußenseiten entsprechend korrosionsbeständig gegenüber Kohlendioxid ausgerüstet sind.

In einer Weiterbildung der Erfindung kann bei einem Rohrleitungssystem, welches zumindest ein weiteres, zweites Innenrohr umfasst, das zumindest eine weitere, zweite Innenrohr mit einem im Vergleich zum lichten Außenrohrdurchmesser kleineren, zweiten lichten Innenrohrdurchmesser innerhalb des Außenrohrs geführt sein, wobei das weitere, zweite Innenrohr so ausgelegt ist, dass es ein weiteres fluides Innenrohr-Medium mit einem zweiten Innenrohrdruck enthält, wobei der Außenrohrdruck größer ist als der zweite Innenrohrdruck.

Der hier gewählte Begriff "zumindest ein weiteres, zweites Innenrohr" umfasst sowohl Ausführungen mit einem zusätzlichen zweiten Innenrohr, das gemeinsam mit dem zuvor beschriebenen ersten Innenrohr innerhalb des Außenrohrs des Rohrleitungssystems geführt wird. Ebenso umfasst dieser gewählte Begriff auch solche Ausführungen, bei denen mehrere Innenrohre, beispielsweise drei, vier oder fünf Innenrohre gemeinsam als Innenrohrbündel innerhalb eines einzigen, gemeinsamen Außenrohres des Rohrleitungssystems geführt werden. Dem Fachmann ist hierzu klar, dass die Dimensionen der zwei oder mehreren Innenrohre variabel sein können. So können die zwei oder mehreren Innenrohre beispielsweise jeweils gleich große lichte Innenrohrdurchmesser aufweisen. Alternativ oder in Ergänzung dazu können einzelne Innenrohre auch individuelle lichte Innenrohrdurchmesser aufweisen, die größer oder kleiner sein können als die Dimension weiterer Innenrohre. Ebenso ist es möglich, die zwei oder mehreren Innenrohre jeweils individuell im GleichstromBetrieb oder im Gegenstrom-Betrieb in Bezug zum Außenrohr-Medium mit Innenrohr-Medium zu beaufschlagen. Ebenso können die Strömungsgeschwindigkeiten innerhalb der zwei oder mehreren Innenrohre zueinander gleich oder individuell unterschiedlich sein und/oder schneller oder langsamer als die herrschende Strömungsgeschwindigkeit des Außenrohr-Mediums innerhalb des Außenrohres ausgewählt werden. Weiters kann in dieser Ausführung mit zwei oder mehreren Innenrohren das Außenrohr-Medium im Außenrohr als stationäres Puffergas rein zum Druckbeaufschlagen des Außenrohres dienen. Die Strömungsgeschwindigkeit eines solchen stationären Puffergases ist somit null.

In einer weiteren bevorzugten Ausführung der Erfindung kann das zumindest eine weitere, zweite Innenrohr parallel zum ersten Innenrohr geführt sein. Wie vorhin bereits dargelegt bietet diese Ausführung, wonach ein zweites Innenrohr und gegebenenfalls weitere Innenrohre mittels entsprechender Abstandhalter parallel zum ersten Innenrohr geführt ist bzw. sind, den Vorteil, dass ein direkter Wandkontakt zwischen den mehreren Innenrohr und dem Außenrohr vermieden werden kann. Die mehreren Innenrohre sind somit innerhalb des Außenrohres aufgrund des im Vergleich zum jeweiligen Innenrohrdruck jeweils größeren Außenrohrdruck jeweils gleichmäßig mit einem Überdruck beaufschlagt. Ein unerwünschter Austritt eines Innenrohr-Mediums nach außen in das Außenrohr wird damit möglichst vermieden.

Besonders zweckmäßig kann sein, wenn bei einem erfindungsgemäßen Rohrleitungssystem das im weiteren, zweiten Innenrohr transportierte fluide Innenrohr-Medium Wasserstoff enthält oder Wasserstoff ist. In dieser Ausführung kann in zwei oder mehreren Innenrohren jeweils Wasserstoff transportiert werden. Beispielsweise können solcherart unterschiedliche Wasserstoff-Qualitäten bzw. Wasserstoff in unterschiedlicher Konzentration jeweils separat in individuellen Innenrohrleitungen innerhalb ein und desselben erfindungsgemäßen Rohrleitungssystems transportiert werden.

Um einen möglichst sicheren Transport von Wasserstoff zu gewährleisten, kann bei einem Rohrleitungssystem gemäß der Erfindung vorteilhaft das erste Innenrohr und gegebenenfalls das zumindest eine weitere, zweite Innenrohr mit einem für den Transport von Wasserstoff geeigneten Rohrleitungsmaterial zumindest innenseitig beschichtet oder aus einem solchen geeigneten Rohrleitungsmaterial hergestellt sein, wobei das geeignete Rohrleitungsmaterial ausgewählt ist aus der Gruppe umfassend: Austenitischer Stahl, Kompositmaterial mit einer Kohlenstofffaser-Struktur, Kompositmaterial mit einer Kohlenstofffaser-Struktur mit Glasfaser-Verstärkung, Kohlenstofffaserverstärkter Polymerkunststoff, Perfluoralkoxy-Polymer-Kunststoff, Polytetrafluorethylen-Kunststoff, Ethylen-Propylen-Copolymer-Kunststoff.

Austenitische Stähle, beispielsweise CrNi-(Chrom-Nickel legierte-) Stähle, bilden unter den Stählen eine Ausnahme, da sie für einen direkten Kontakt mit Wasserstoff auch über längere Zeit geeignet sind. Austenitische Stähle sind weitgehend unempfindlich gegen Wasserstoffversprödung und gehören daher zu den bevorzugten Werkstoffen der Wasserstofftechnik.

Wie bereits festgehalten, haben polymere Werkstoffe gegenüber Metallen den Vorteil, dass es bei Kontakt mit Wasserstoff zu keiner Wasserstoffversprödung kommt.

Kohlenstofffasern werden überwiegend zur Herstellung von kohlenstofffaserverstärktem Kunststoff (kurz: CFK; C-Faser verstärkter Kunststoff) benutzt. Kompositmaterialien, die Kohlenstofffasermatten oder Kohlenstofffaser-Gelege umfassen und die gegebenenfalls mit Glasfasereinlagen verstärkt sein können, haben sich bereits als für den Kontakt mit Wasserstoff geeignete Materialien erwiesen. So werden beispielsweise Wasserstofftanks für mit Wasserstoff betriebene Kraftfahrzeuge aus polymeren Verbundwerkstoffen hergestellt, wobei hochvernetzte Polymere als Linermaterial die Innenlage solcher Tanks bilden, die außenseitig von in Harz eingebetteten Kohlefasermattten verstärkt sind.

Perfluoralkoxy-Polymere (kurz: PFA) sind vollständig fluorierte Kunststoffe, Copolymere aus Tetrafluorethylen (TFE) und Perfluoralkoxyvinylethern, wie beispielsweise Perfluorvinylpropylether. Diese Polymere sind eine Weiterentwicklung des verbreiteten Sinterwerkstoffes Polytetrafluorethylen (PTFE, bekannt als Markenname Teflon^{®}). PFA sind im Gegensatz zu PTFE thermoplastisch verarbeitbar und weisen weiter verbesserte Antihafteigenschaften sowie eine noch höhere Chemikalienbeständigkeit als PTFE auf.

Bei Ethylen-Propylen-Copolymer (kurz: E/P, früher auch EPM, auch EPR von engl. Ethylen-Propylen-Rubber) handelt es sich um ein Copolymer, das aus Ethen und Propen hergestellt wird. Einsatzgebiete sind zum Beispiel Schmelzklebstoffe und Dichtstoffe.

Die vorstehend genannten Werkstoffe sind an sich für den direkten Kontakt mit konzentriertem Wasserstoff geeignet. Vorzugsweise ist es im Rahmen der Erfindung vorgesehen, einen dieser Werkstoffe oder eine Kombination von zwei oder mehreren der genannten Werkstoffe als Material für den Aufbau eines oder mehrerer Innenrohre zu verwenden. Ebenso ist es vom Rahmen der Erfindung umfasst, diejenigen Innenrohre, die zum Wasserstofftransport vorgesehen sind, zumindest innenseitig mit einem der genannten Werkstoffe oder einer Kombination von zwei oder mehreren der genannten Werkstoffe zu beschichten, um den unerwünschten Durchtritt von Wasserstoff durch ein Innenrohr möglichst zu verhindern.

Besonders sicher kann Wasserstoff mit einem erfindungsgemäßen Rohrleitungssystem transportiert werden, wenn das Außenrohr-Medium ein Puffergas oder inertes Schutzgas enthält oder ein solches Gas ist. Der hier gewählte Begriff "Puffergas" oder "inertes Schutzgas" umfasst all jene Gase, die sehr reaktionsträge bzw. inert sind und sich praktisch nicht an chemischen Reaktionen beteiligen. Als Puffergas kann beispielsweise herkömmliches Erdgas verwendet werden. Zu den Inertgasen gehören zum Beispiel elementare Gase wie Stickstoff sowie Edelgase wie Helium, Neon, Argon, Krypton, Xenon.

Das Puffergas oder inerte Schutzgas kann beispielsweise im Außenrohr mit kleiner Geschwindigkeit in beide Richtungen bewegt werden. Besonders zweckmäßig kann es sein, wenn das Außenrohr-Medium stationär im Außenrohr befüllt ist und bloß zur Druckbeaufschlagung des Außenrohrs dient.

Um auf bereits bestehende Erdgasleitungen zum Transport von Wasserstoff zurückgreifen zu können, kann es besonders wirtschaftlich sein, wenn bei einem erfindungsgemäßen Rohrleitungssystem das Außenrohr ein Bestandsrohr einer bestehenden Erdgasleitung ist, wobei innerhalb der Erdgasleitung und somit innerhalb des Bestandsrohres das erste Innenrohr und gegebenenfalls zumindest ein weiteres, zweites Innenrohr geführt ist bzw. geführt sind. Zu den weiteren Vorteilen des Einsatzes bzw. des Umrüstens von bestehenden Erdgasleitungen für den Transport von Wasserstoff wird dazu auf die an sich gleichlautenden Vorteile der vorhin bereits genannten Ausführungsvarianten verwiesen.

In einer Weiterbildung der Erfindung kann weiters ein Rohrleitungssystem angegeben werden, wobei das zumindest eine Innenrohr-Medium im zumindest einen Innenrohr mit einer größeren Strömungsgeschwindigkeit fließt als das Außenrohr-Medium im Außenrohr.

Vorteilhaft ist bei einem solchen erfindungsgemäßen Rohrleitungssystem das zumindest eine Innenrohr so ausgelegt, dass das darin befindliche fluide Innenrohr-Medium Wasserstoff enthält oder Wasserstoff ist und mit einer größeren Strömungsgeschwindigkeit gefördert wird als das fluide Außenrohr-Medium im Außenrohr. Da der lichte Innenrohrdurchmesser des zumindest einen Innenrohres zwingend kleiner ist als der lichte Außenrohrdurchmesser, kann gemäß dieser vorteilhaften Ausführung die geringere Fördermenge des Innenrohr-Mediums aufgrund einer vergleichsweise kleinen Innenrohrdimension durch eine entsprechend größere Strömungsgeschwindigkeit des Innenrohr-Mediums innerhalb des zumindest einen Innenrohres ausgeglichen werden.

In einer weiteren vorteilhaften Ausführung kann ein Rohrleitungsystem gemäß der Erfindung angegeben werden, wobei das zumindest eine Innenrohr-Medium in gleicher Strömungsrichtung wie die Strömungsrichtung des Außenrohr-Mediums fließt.

In dieser zweckmäßigen Ausführungsvariante eines erfindungsgemäßen Rohrleitungssystems wird in einer inneren Rohrleitung das zumindest eine Innenrohr-Medium, welches Wasserstoff enthält oder Wasserstoff ist, in gleicher Strömungsrichtung wie das Außenrohr-Medium gefördert. Der Gleichstrombetrieb, wonach das zumindest eine Innenrohr-Medium sowie das Außenrohr-Medium in gleicher Strömungsrichtung innerhalb des Rohrleitungssystems transportiert werden, bietet den Vorteil, dass beispielsweise beide Medien an einem ersten Ort, dem Ort ihrer Produktion, dem Rohrleitungssystem aufgegeben und an einem davon entfernten, zweiten Ort von einem Verbraucher der jeweiligen Rohrleitung entnommen werden können.

Ebenso kann es vorteilhaft sein, wenn bei einem erfindungsgemäßen Rohrleitungssystem das zumindest eine Innenrohr-Medium in entgegengesetzter Strömungsrichtung zur Strömungsrichtung des Außenrohr-Mediums fließt.

In dieser weiteren zweckmäßigen Ausführungsvariante eines erfindungsgemäßen Rohrleitungssystems wird in einer inneren Rohrleitung das zumindest eine Innenrohr-Medium, das Wasserstoff enthält oder Wasserstoff ist, in entgegengesetzter Strömungsrichtung wie das Außenrohr-Medium gefördert. Der Gegenstrombetrieb, wonach das zumindest eine Innenrohr-Medium sowie das Außenrohr-Medium in entgegengesetzter Strömungsrichtung innerhalb des Rohrleitungssystems transportiert werden können, bietet den Vorteil, dass beispielsweise jedes der Medien unabhängig voneinander von einem ersten Ort an einen davon entfernten, zweiten Ort entlang der Transportleitung befördert werden kann. So kann beispielsweise das Innenrohr-Medium am ersten Ort produziert und der Transportleitung aufgegeben und am zweiten Ort von einem entsprechenden Verbraucher der Transportleitung entnommen werden. Umgekehrt kann es beispielsweise zweckmäßig sein, das Außenrohr-Medium am zweiten Ort zu produzieren und der Transportleitung ebendort aufzugeben, damit das Außenrohr-Medium am ersten Ort von einem Verbraucher dem Rohrleitungssystem entnommen und weiter genutzt werden kann. Solcherart können mit dem Rohrleitungssystem besonders flexibel und effizient unterschiedliche Medien in unterschiedlichen Strömungsrichtungen transportiert werden.

Das Außenrohr-Medium kann weiters auch stationär innerhalb des Außenrohres des Rohrleitungssystems eingefüllt sein und als statisches bzw. stationäres Schutzgas wirken. In diesem Fall beträgt die Strömungsgeschwindigkeit null, das Außenrohr-Medium ruht in der Rohrleitung.

Die eingangs genannte erfindungsgemäße Aufgabe wird auch mit einem Verfahren zum Transport von Wasserstoff gelöst, wobei das Verfahren die folgenden Schritte umfasst:
- Bereitstellen eines Rohrleitungssystems umfassend ein Außenrohr mit einem lichten Außenrohrdurchmesser sowie ein erstes Innenrohr mit einem lichten Innenrohrdurchmesser, wobei das erste Innenrohr einen im Vergleich zum lichten Außenrohrdurchmesser kleineren lichten Innenrohrdurchmesser aufweist sowie innerhalb des Außenrohrs geführt wird;
- Befüllen des Außenrohrs mit einem fluiden Außenrohr-Medium, wobei das Außenrohr mit einem Außenrohrdruck beaufschlagt wird;
- Befüllen des ersten Innenrohres mit einem fluiden Innenrohr-Medium, wobei das Innenrohr-Medium Wasserstoff enthält oder Wasserstoff ist, und wobei das Innenrohr-Medium mit einem Innenrohrdruck beaufschlagt wird;
- Einstellen einer Druckdifferenz, wobei der Außenrohrdruck größer gewählt wird als der Innenrohrdruck im ersten Innenrohr.

Vorzugsweise wird verfahrensgemäß ein Rohrleitungssystem gemäß der Erfindung bereit gestellt, wobei die vorhin genannten Vorteile und Effekte eines erfindungsgemäßen Rohrleitungssystems sinngemäß und an sich gleichlautend auch für das genannte erfindungsgemäße Transportverfahren gelten. Der Übersichtlichkeit wegen wird hier auf die nochmalige Nennung dieser Vorteile verzichtet, sondern auf das bisher Gesagte verwiesen.

In besonders vorteilhafter Weise können die weiteren Verfahrensschritte, nämlich das Befüllen des Außenrohrs mit einem fluiden Außenrohr-Medium, wobei das Außenrohr mit einem Außenrohrdruck beaufschlagt wird, sowie das Befüllen des ersten Innenrohres mit einem fluiden Innenrohr-Medium, wobei das Innenrohr-Medium Wasserstoff enthält oder Wasserstoff ist, und wobei das Innenrohr-Medium mit einem Innenrohrdruck beaufschlagt wird, im Wesentlichen gleichzeitig durchgeführt werden. In einem solchen Fall kann eine große Druckdifferenz zwischen dem Innenrohrdruck und dem Außenrohrdruck vermieden werden, die sich andernfalls einstellen würde, wenn zuerst beim Befüllen des Rohrleitungssystems beispielsweise nur der Außenrohrdruck erhöht werden würde, ohne dabei auch den Innenrohrdruck entsprechend zu erhöhen. Ebenso würde im umgekehrten Fall, wenn beispielsweise beim Befüllen des Rohrleitungssystems zuerst nur der Innenrohrdruck erhöht wird, ohne im Wesentlichen gleichzeitig auch den Außenrohrdruck entsprechend zu erhöhen, eine große Druckdifferenz zwischen dem Innenrohrdruck und dem Außenrohrdruck gebildet werden. Wie vorhin bereits erwähnt, können bei moderatem Differenzdruck zwischen dem Innenrohrdruck und dem Außenrohrdruck in vorteilhafter Weise auch Innenrohrmaterialien eingesetzt werden, die besonders gut geeignet für den Kontakt mit Wasserstoff sind, da sie nicht verspröden, die aber an sich nicht für Hochdruckanwendungen geeignet sind, wie beispielsweise Innenrohre aus polymeren Werkstoffen.

Abschließend wird verfahrensgemäß die Druckdifferenz eingestellt, wobei der Außenrohrdruck größer gewählt wird als der Innenrohrdruck im ersten Innenrohr.

Auch das erfindungsgemäße Transportverfahren von Wasserstoff bietet den Vorteil, dass aufgrund der gewählten Druckdifferenz zwischen dem größeren Außenrohrdruck und dem im Vergleich dazu kleineren Innenrohrdruck ein Druckgefälle vom Außenrohr in Richtung des innerhalb des Außenrohrs angeordneten ersten Innenrohrs erzeugt wird, welches Druckgefälle einem unerwünschten Austritt des fluiden Innenrohr-Mediums aus dem Innenrohr in das umgebende Außenrohr entgegenwirkt. Beim Einsatz von Wasserstoff, vorzugsweise von Wasserstoff in konzentrierter Form oder als reiner Wasserstoff, als Innenrohr-Medium wirkt die aufgeprägte Druckdifferenz bzw. das Druckgefälle mit einem Außenrohrdruck im Außenrohr, der größer ist als der Innenrohrdruck im ersten Innenrohr, somit unerwünschten Durchtrittsverlusten von Wasserstoff durch die Wandungen des Innenrohrs entgegen.

Zweckmäßig kann bei einem erfindungsgemäßen Verfahren der Außenrohrdruck um zumindest 1 bar größer gewählt werden als der Innenrohrdruck.

Eine Druckdifferenz von zumindest 1 bar, um die der Außenrohrdruck größer als der Innenrohrdruck gewählt wird, kann ausreichend sein, um je nach gewähltem Innenrohrmaterial unerwünschte Durchtrittsverluste von Wasserstoff als Innenrohr-Medium durch die Wandungen des Innenrohrs möglichst zu vermeiden.

In einer vorteilhaften Weiterbildung des erfindungsgemäßen Verfahrens kann der Außenrohrdruck von 1 bar bis 10 bar, vorzugsweise von 1 bar bis 5 bar, besonders bevorzugt von 1 bar bis 2 bar, größer gewählt werden als der Innenrohrdruck.

Je kleiner die Druckdifferenz zwischen dem Außenrohrdruck und dem Innenrohrdruck ausgewählt wird, umso geringer ist damit einhergehend die mechanische Belastung, die aufgrund des Überdrucks im Außenrohr auf das entsprechende Innenrohrmaterial wirkt. Umgekehrt können bei einer größeren Druckdifferenz unerwünschte Durchtrittsverluste von Wasserstoff durch das Innenrohrmaterial hindurch in das Außenrohr-Medium zumindest weiter verringert oder gänzlich vermieden werden.

Besonders flexibel kann ein erfindungsgemäßes Verfahren für den Transport von Wasserstoff eingesetzt werden, wenn der absolute Außenrohrdruck größer als 50 bar, vorzugsweise größer als 90 bar, besonders bevorzugt größer als 100 bar, eingestellt wird.

In einer Weiterbildung des erfindungsgemäßen Verfahrens kann ein Rohrleitungssystem bereitgestellt werden mit zumindest einem weiteren, zweiten Innenrohr mit einem im Vergleich zum lichten Außenrohrdurchmesser kleineren, zweiten lichten Innenrohrdurchmesser, wobei das weitere, zweite Innenrohr innerhalb des Außenrohres geführt wird und mit einem weiteren, zweiten fluiden Innenrohr-Medium befüllt wird, welches zweite Innenrohr-Medium vorzugsweise Wasserstoff enthält oder Wasserstoff ist, und wobei das zweite Innenrohr-Medium mit einem zweiten Innenrohrdruck beaufschlagt wird, wobei der Außenrohrdruck größer gewählt wird als der zweite Innenrohrdruck im weiteren, zweiten Innenrohr.

Um unerwünschte Durchtrittsverluste infolge von Permeation von Wasserstoff durch das zumindest eine mit Wasserstoff direkt in Kontakt stehende Innenrohr hindurch zu vermeiden sowie um eine Materialermüdung infolge von Wasserstoffkorrosion des betreffenden zumindest einen Innenrohrs zu verhindern, kann beim erfindungsgemäßen Verfahren das erste Innenrohr und gegebenenfalls das zumindest eine weitere, zweite Innenrohr mit einem für den Transport von Wasserstoff geeigneten Rohrleitungsmaterial zumindest innenseitig beschichtet oder aus einem solchen geeigneten Rohrleitungsmaterial hergestellt werden, wobei das geeignete Rohrleitungsmaterial ausgewählt wird aus der Gruppe umfassend: Austenitischer Stahl, Kompositmaterial mit einer Kohlenstofffaser-Struktur, Kompositmaterial mit einer Kohlenstofffaser-Struktur mit Glasfaser-Verstärkung, Kohlenstofffaserverstärkter Polymerkunststoff, Perfluoralkoxy-Polymer-Kunststoff, Polytetrafluorethylen-Kunststoff, Ethylen-Propylen-Copolymer-Kunststoff.

Die Vorteile dieser Werkstoffe jeweils für sich oder in Kombination mit weiteren Werkstoffen als Linermaterialien für die innenseitige Beschichtung des zumindest einen Innenrohrs oder aber zur Herstellung des bzw. der Innenrohre wurden bereits zuvor genannt.

Besonders wirtschaftlich und nachhaltig kann es sein, wenn beim erfindungsgemäßen Verfahren zum Transport von Wasserstoff als Außenrohr ein Bestandsrohr einer bestehenden Erdgasleitung verwendet wird, wobei innerhalb des Außenrohrs das erste Innenrohr und gegebenenfalls zumindest ein weiteres, zweites Innenrohr geführt wird bzw. werden.

### KURZE BESCHREIBUNG DER FIGUREN

Die Erfindung wird nun anhand von Ausführungsbeispielen näher erläutert. Die schematischen Zeichnungen sind beispielhaft und sollen den Erfindungsgedanken zwar darlegen, diesen aber keinesfalls einengen oder gar abschließend wiedergeben.

Es zeigen:
- Fig. 1: in einer isometrischen Ansicht von der Seite einen Längenabschnitt eines ersten erfindungsgemäßen Rohrleitungssystems;
- Fig. 2: in einer Frontalansicht eine zweite Ausführung eines erfindungsgemäßen Rohrleitungssystems mit einem Innenrohr;
- Fig. 3: in einer Frontalansicht eine dritte Ausführung eines erfindungsgemäßen Rohrleitungssystems mit zwei Innenrohren.

### WEGE ZUR AUSFÜHRUNG DER ERFINDUNG

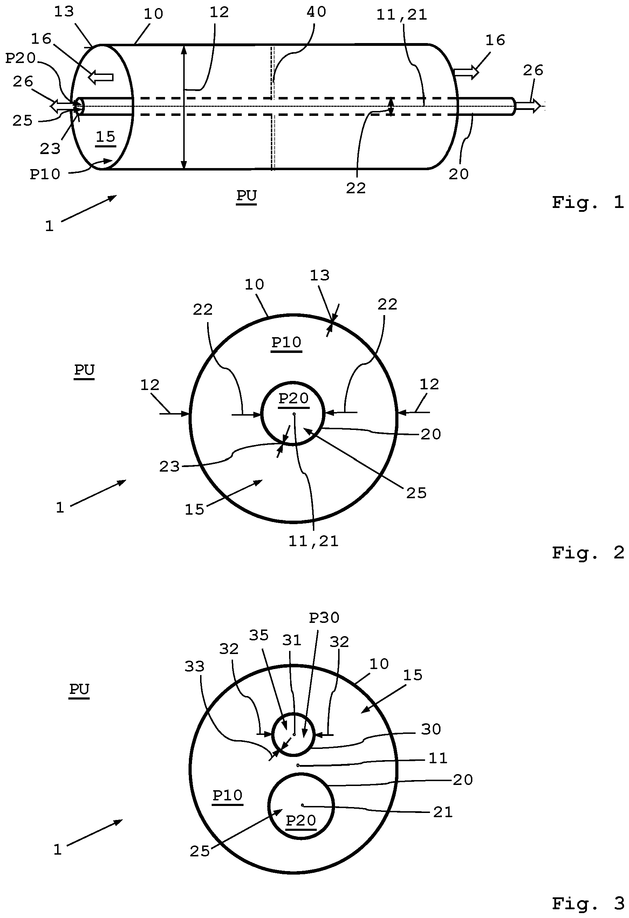

Fig. 1 zeigt schematisch ein Rohrleitungssystem 1 gemäß der Erfindung mit einem zylindrischen Außenrohr 10, wobei das Außenrohr 10 eine Achsenrichtung 11 des Außenrohrs 10 sowie einen lichten Durchmesser 12 aufweist. Das Außenrohr 10 hat eine Wandstärke 13 und ist beispielsweise ein in herkömmlicher Weise aus Stahl gefertigtes Außenrohr 10 einer bestehenden Erdgasleitung, das aufgrund des Außenrohrmaterials für sich nicht für den direkten Transport von Wasserstoff, zumindest nicht für den Transport von konzentriertem Wasserstoff, geeignet ist.

Innerhalb des Außenrohres 10 befindet sich ein erstes zylindrisches Innenrohr 20 mit einer Achsenrichtung 21 sowie mit einem lichten Durchmesser 22. Der lichte Durchmesser 22 des Innenrohres 20, also der Innenrohrdurchmesser 22, beträgt hier beispielsweise nur etwa 15% (15 Prozent) des Außenrohrdurchmessers 12. Das Innenrohr 20 weist eine Wandstärke 23 auf und ist aus einem für den Kontakt mit Wasserstoff geeigneten Wandmaterial gefertigt. Beispielsweise ist das Innenrohr 20 aus austenitischem, rostfreiem Stahl gefertigt und ist innenseitig mit einer Polymerschicht aus Perfluoralkoxy-Polymeren (PFA) beschichtet.

Die beiden Rohre, also das Außenrohr 10 und das innerhalb des Außenrohres 10 geführte erste Innenrohr 20 sind hier koaxial bzw. konzentrisch angeordnet, wobei entsprechende Abstandhalter 40 zur statischen Positionierung des Innenrohres 20 innerhalb des Außenrohres 10 dienen.

Im Außenrohr 10 befindet sich ein fluides Außenrohr-Medium 15, das hier beispielsweise als Puffergas in Form von Stickstoff vorgelegt ist und mit einer kleinen Strömungsgeschwindigkeit beispielsweise von 0,5 m/s bis 3,5 m/s, symbolisiert durch einen Doppelpfeil 16, in Strömungsrichtung 16 des Außenrohr-Mediums 15 im Außenrohr 10 transportiert wird. Das Außenrohr-Medium 15 in Form von Stickstoff kann hier in beiden Richtungen 16 innerhalb des Außenrohres 10 transportiert werden.

Im ersten Innenrohr 20 befindet sich ein fluides Innenrohr-Medium 25, das hier beispielhaft konzentrierter Wasserstoff ist. Eine Strömungsrichtung 26 des Innenrohr-Mediums 25 im ersten Innenrohr 20 ist durch einen Doppelfeil 26 symbolisiert. Auch das Innenrohr-Medium 15 in Form von Wasserstoff kann hier in beiden Richtungen 26 innerhalb des Innenrohres 20 transportiert werden. Somit ist bei der in Fig. 1 gezeigten Ausführung eines Rohrleitungssystems 1 sowohl ein Gleichstrombetrieb, als auch ein Gegenstrombetrieb zwischen dem Außenrohr-Medium 15 und dem Innenrohr-Medium 25 in Form von Wasserstoff möglich. Ebenso ist es möglich, dass das Außenrohr-Medium 15 in Form von Stickstoff stationär im Außenrohr 10 vorgelegt wird. In diesem Fall beträgt die Strömungsgeschwindigkeit 16 null, das Außenrohr-Medium 15 ruht stationär innerhalb des Außenrohres 10.

Ein Druck P10 des Außenrohr-Mediums 15 im Außenrohr 10, der im Weiteren auch als Außenrohrdruck P10 bezeichnet wird, ist dabei so gewählt, dass der Außenrohrdruck P10 jedenfalls größer ist als ein Innenrohrdruck P20, der als Druck P20 im mit Wasserstoff befüllten ersten Innenrohr 20 herrscht. Beispielsweise ist die Druckdifferenz hier so gewählt, dass der Außenrohrdruck P10 um 2 bar größer ist als der Innenrohrdruck P20.

Außerhalb des Rohrleitungssystems 1 herrscht hier ein Umgebungsdruck PU, der abhängig von der jeweiligen Einbaulage des Rohrleitungssystems 1 ist. Im Falle eines überirdisch frei verlegten Rohrleitungssystems 1 kann der Umgebungsdruck PU beispielsweise ein Normaldruck von 1,01325 bar bzw. von 1013,25 mbar sein. In einem anderen Fall, wonach das Rohrleitungssystem 1 unterirdisch verlegt ist, kann auf eine solche unterirdisch geführte Rohrleitung ein Umgebungsdruck PU wirken, der aufgrund des jeweils herrschenden Erddrucks in Abhängigkeit von der Einbautiefe des Rohrleitungssystems 1 sowie aufgrund einer gegebenenfalls vorhandenen Nutzlast oder Auflast einen gegenüber dem Normaldruck erhöhten Umgebungsdruck aufweist.

Der Absolutdruck, der hier als Außenrohrdruck P10 innerhalb des Außenrohres 10 eingestellt ist, beträgt beispielsweise 100 bar. Der Absolutdruck des hier eingestellten Innenrohrdrucks P20 beträgt aufgrund der gewählten Druckdifferenz von 2 bar demnach beispielsweise 98 bar.

Aufgrund der gewählten Druckdifferenz werden unerwünschte Durchtrittsverluste von Wasserstoff als transportiertem Innenrohr-Medium 25 durch das Innenrohr 20 hindurch in die Rohrkammer des Außenrohres 10 möglichst verhindert. Somit wird mit dem hier beispielhaft gezeigten Rohrleitungssystem 1 ein sicherer Transport von konzentriertem Wasserstoff ermöglicht.

Fig. 2 zeigt in einer Frontalansicht eine zweite Ausführung eines erfindungsgemäßen Rohrleitungssystems 1 mit einem Innenrohr 20. Der in Fig. 2 gezeigte Aufbau entspricht im Wesentlichen dem in Fig. 1 veranschaulichten Aufbau. Gleiche Bezugszeichen bezeichnen jeweils gleiche Bauteile und Komponenten, weshalb auf die nochmalige Nennung von bereits zuvor beschriebenen Bezugszeichen verzichtet wird.

Im Unterschied zu Fig. 1 weist hier in Fig. 2 das Innenrohr 20 einen lichten Innenrohrdurchmesser 22 auf, der etwas größer ist und hier etwa 20% (20 Prozent) des lichten Außenrohrdurchmessers 12 des Außenrohres 10 beträgt. Das Innenrohr 20 ist wiederum konzentrisch mit seiner Achsenrichtung 21 in Bezug zur Achsenrichtung 11 des Außenrohres 10 positioniert. Das Wandmaterial des Innenrohres 20 weist eine Wandstärke 23 auf und ist aus einem für den Kontakt mit Wasserstoff geeigneten Wandmaterial gefertigt. Das Außenrohr 10 ist hier ein Stahlrohr.

Der Außenrohrdruck P10 des Außenrohr-Mediums 15 im Außenrohr 10 ist dabei so gewählt, dass der Außenrohrdruck P10 jedenfalls größer ist als der Innenrohrdruck P20, der als Druck P20 im mit Wasserstoff befüllten ersten Innenrohr 20 herrscht. Beispielsweise ist die Druckdifferenz hier so gewählt, dass der Außenrohrdruck P10 um 5 bar größer ist als der Innenrohrdruck P20. Das Außenrohr-Medium 15 ist hier beispielsweise Erdgas.

Außerhalb des Rohrleitungssystems 1 herrscht hier wiederum ein Umgebungsdruck PU, der abhängig vom jeweiligen Standort der Rohrleitung beispielsweise größer als der Normaldruck von 1,01325 bar bzw. von 1013,25 mbar sein kann.

Der Absolutdruck, der hier als Außenrohrdruck P10 innerhalb des Außenrohres 10 eingestellt ist, beträgt beispielsweise 200 bar. Der Absolutdruck des hier eingestellten Innenrohrdrucks P20 beträgt aufgrund der gewählten Druckdifferenz von 5 bar folglich beispielsweise 195 bar.

Fig. 3 stellt in einer Frontalansicht eine dritte Ausführung eines erfindungsgemäßen Rohrleitungssystems 1 mit zwei Innenrohren 20, 30 dar. Beide Innenrohre 20, 30 sind wiederum innerhalb eines gemeinsamen Außenrohres 10 geführt.

Das zweite bzw. weitere Innenrohr 30 hat eine Achsenrichtung 31, die parallel ist mit der Achsenrichtung 11 des Außenrohres sowie parallel mit der Achsenrichtung 21 des ersten Innenrohres 20. Das zweite Innenrohr 30 weist einen lichten Durchmesser 32 auf, der etwas kleiner ist als der lichte Durchmesser 22 des ersten Innenrohres 20. Eine Wandstärke 33 des zweiten Innenrohrs 30 entspricht hier jener Wandstärke 23 des ersten Innenrohres 20. Beide Innenrohrleitungen 20 und 30 sind hier beispielhaft jeweils für den Transport von Wasserstoff geeignet. Im ersten Innenrohr 20 befindet sich beispielsweise Wasserstoff, der mit einem ersten Innenrohrdruck P20 als erstes Innenrohr-Medium 25 befördert wird.

Im zweiten Innenrohr 30 befindet sich beispielsweise ebenfalls Wasserstoff als zweites Innenrohr-Medium 35, wobei das zweite Innenrohr-Medium 35 jedoch eine im Vergleich zum ersten Innenrohr-Medium 25 geringfügig andere Zusammensetzung des Wasserstoffs samt darin enthaltenen Verunreinigungen wie beispielsweise Kohlendioxid (CO₂) aufweist. Ein zweiter Innenrohrdruck P30, also der Druck P30 im zweiten Innenrohr 30, entspricht dem ersten Innenrohrdruck P20. Der Außenrohrdruck P10 ist hier beispielsweise jeweils um 3 bar größer gewählt als der erste Innenrohrdruck P20 sowie der zweite Innenrohrdruck P30.

Gegebenenfalls können noch weitere Innenrohre, beispielsweise ein drittes und/oder ein viertes Innenrohr, innerhalb des Außenrohres eines erfindungsgemäßen Rohrleitungssystems geführt werden. Diese weiteren Ausführungsvarianten sind zwar nicht explizit in eigenen Abbildungen veranschaulicht. Dem Fachmann ist anhand der vorliegenden Beschreibung jedoch auch ohne schematische Darstellungen der entsprechende Aufbau solcher erfindungsgemäßen Varianten von Rohrleitungen klar.

### BEZUGSZEICHENLISTE

- 1: Rohrleitungssystem
- 10: Außenrohr
- 11: Achsenrichtung des Außenrohrs
- 12: lichter Durchmesser des Außenrohrs
- 13: Wandstärke des Außenrohrs
- 15: fluides Außenrohr-Medium; Puffergas
- 16: Strömungsrichtung des Mediums im Außenrohr (Pfeil)
- 20: (erstes) Innenrohr
- 21: Achsenrichtung des (ersten) Innenrohrs
- 22: lichter Durchmesser des (ersten) Innenrohrs
- 23: Wandstärke des (ersten) Innenrohrs
- 25: (erstes) fluides Innenrohr-Medium; Wasserstoff
- 26: Strömungsrichtung des Mediums im (ersten) Innenrohr (Pfeil)
- 30: zweites (bzw. weiteres) Innenrohr
- 31: Achsenrichtung des zweiten (bzw. weiteren) Innenrohrs
- 32: lichter Durchmesser des zweiten (bzw. weiteren) Innenrohrs
- 33: Wandstärke des zweiten (bzw. weiteren) Innenrohrs
- 35: zweites (bzw. weiteres) Innenrohr-Medium
- 40: Abstandhalter
- P10: Druck im Außenrohr; Außenrohrdruck
- P20: Druck im (ersten) Innenrohr; (erster) Innenrohrdruck
- P30: Druck im zweiten Innenrohr; zweiter Innenrohrdruck
- PU: Umgebungsdruck

## Patentansprüche

1. Rohrleitungssystem (1) zum Transport von Wasserstoff, umfassend ein Außenrohr (10) mit einem lichten Außenrohrdurchmesser (12) sowie ein erstes Innenrohr (20) mit einem lichten Innenrohrdurchmesser (22), wobei das erste Innenrohr (20) einen im Vergleich zum lichten Außenrohrdurchmesser (12) kleineren lichten Innenrohrdurchmesser (22) aufweist sowie innerhalb des Außenrohrs (10) geführt ist, und wobei das Außenrohr (10) ein fluides Außenrohr-Medium (15) enthält und mit einem Außenrohrdruck (P10) beaufschlagt ist, und wobei das erste Innenrohr (20) ein fluides Innenrohr-Medium (25) enthält und mit einem Innenrohrdruck (P20) beaufschlagt ist, wobei das Innenrohr-Medium (25, 35) Wasserstoff enthält oder Wasserstoff ist, **dadurch gekennzeichnet, dass** der Außenrohrdruck (P10) größer ist als der Innenrohrdruck (P20).

2. Rohrleitungssystem (1) nach Anspruch 1, **dadurch gekennzeichnet, dass** der Außenrohrdruck (P10) um zumindest 1 bar größer ist als der Innenrohrdruck (P20).

3. Rohrleitungssystem (1) nach Anspruch 1 oder 2, **dadurch gekennzeichnet, dass** der Außenrohrdruck (P10) von 1 bar bis 10 bar, vorzugsweise von 1 bar bis 5 bar, besonders bevorzugt von 1 bar bis 2 bar, größer ist als der Innenrohrdruck (P20).

4. Rohrleitungssystem (1) nach einem der Ansprüche 1 bis 3, **dadurch gekennzeichnet, dass** der absolute Außenrohrdruck (P10) größer als 50 bar, vorzugsweise größer als 90 bar, besonders bevorzugt größer als 100 bar, ist.

5. Rohrleitungssystem (1) nach einem der Ansprüche 1 bis 4, **dadurch gekennzeichnet, dass** das erste Innenrohr (20) parallel mit dem Außenrohr (10), vorzugsweise konzentrisch mit dem Außenrohr (20), geführt ist.

6. Rohrleitungssystem (1) nach einem der Ansprüche 1 bis 5, umfassend zumindest ein weiteres, zweites Innenrohr (30), **dadurch gekennzeichnet, dass** das zumindest eine weitere, zweite Innenrohr (30) mit einem im Vergleich zum lichten Außenrohrdurchmesser (12) kleineren, zweiten lichten Innenrohrdurchmesser (32) innerhalb des Außenrohrs (10) geführt ist, wobei das weitere, zweite Innenrohr (30) ein weiteres fluides Innenrohr-Medium (35) enthält und mit einem zweiten Innenrohrdruck (P30) beaufschlagt ist, wobei der Außenrohrdruck (P10) größer ist als der zweite Innenrohrdruck (P30) im weiteren, zweiten Innenrohr (30).

7. Rohrleitungssystem (1) nach Anspruch 6, **dadurch gekennzeichnet, dass** das zumindest eine weitere, zweite Innenrohr (30) parallel zum ersten Innenrohr (20) geführt ist.

8. Rohrleitungssystem (1) nach Anspruch 6 oder 7, **dadurch gekennzeichnet, dass** das im weiteren, zweiten Innenrohr (30) transportierte fluide Innenrohr-Medium (35) Wasserstoff enthält oder Wasserstoff ist.

9. Rohrleitungssystem (1) nach einem der Ansprüche 1 bis 8, **dadurch gekennzeichnet, dass** das erste Innenrohr (20) und gegebenenfalls das zumindest eine weitere, zweite Innenrohr (30) mit einem für den Transport von Wasserstoff geeigneten Rohrleitungsmaterial zumindest innenseitig beschichtet oder aus einem solchen geeigneten Rohrleitungsmaterial hergestellt ist, wobei das geeignete Rohrleitungsmaterial ausgewählt ist aus der Gruppe umfassend: Austenitischer Stahl, Kompositmaterial mit einer Kohlenstofffaser-Struktur, Kompositmaterial mit einer Kohlenstofffaser-Struktur mit Glasfaser-Verstärkung, Kohlenstofffaserverstärkter Polymerkunststoff, Perfluoralkoxy-Polymer-Kunststoff, Polytetrafluorethylen-Kunststoff, Ethylen-Propylen-Copolymer-Kunststoff.

10. Rohrleitungssystem (1) nach einem der Ansprüche 1 bis 9, **dadurch gekennzeichnet, dass** das Außenrohr-Medium (15) ein Puffergas oder inertes Schutzgas enthält oder ist.

11. Rohrleitungssystem (1) nach einem der Ansprüche 1 bis 10,
**dadurch gekennzeichnet, dass** das Außenrohr (10) ein Bestandsrohr einer bestehenden Erdgasleitung ist, innerhalb der das erste Innenrohr (20) und gegebenenfalls zumindest ein weiteres, zweites Innenrohr (30) geführt ist bzw. sind.

12. Rohrleitungssystem nach einem der Ansprüche 1 bis 11, **dadurch gekennzeichnet, dass** das zumindest eine Innenrohr-Medium (25, 35) im zumindest einen Innenrohr (20, 30) mit einer größeren Strömungsgeschwindigkeit fließt als das Außenrohr-Medium (15) im Außenrohr (10).

13. Rohrleitungssystem nach Anspruch 12, **dadurch gekennzeichnet, dass** das zumindest eine Innenrohr-Medium (25) in gleicher Strömungsrichtung (26) wie die Strömungsrichtung (16) des Außenrohr-Mediums (15) fließt.

14. Rohrleitungssystem nach Anspruch 12, **dadurch gekennzeichnet, dass** das zumindest eine Innenrohr-Medium (25) in entgegengesetzter Strömungsrichtung (26) zur Strömungsrichtung (16) des Außenrohr-Mediums (15) fließt.

15. Verfahren zum Transport von Wasserstoff, das Verfahren umfassend die folgenden Schritte:
- Bereitstellen eines Rohrleitungssystems (1) umfassend ein Außenrohr (10) mit einem lichten Außenrohrdurchmesser (12) sowie ein erstes Innenrohr (20) mit einem lichten Innenrohrdurchmesser (22), wobei das erste Innenrohr (20) einen im Vergleich zum lichten Außenrohrdurchmesser (12) kleineren lichten Innenrohrdurchmesser (22) aufweist sowie innerhalb des Außenrohrs (10) geführt wird;
- Befüllen des Außenrohrs (10) mit einem fluiden Außenrohr-Medium (15), wobei das Außenrohr (10) mit einem Außenrohrdruck (P10) beaufschlagt wird;
- Befüllen des ersten Innenrohres (20) mit einem fluiden Innenrohr-Medium (25), wobei das Innenrohr-Medium (25) Wasserstoff enthält oder Wasserstoff ist, und wobei das Innenrohr-Medium (25) mit einem Innenrohrdruck (P20) beaufschlagt wird;
- Einstellen einer Druckdifferenz, wobei der Außenrohrdruck (P10) größer gewählt wird als der Innenrohrdruck (P20) im ersten Innenrohr (20).

16. Verfahren nach Anspruch 15, **dadurch gekennzeichnet, dass** der Außenrohrdruck (P10) um zumindest 1 bar größer gewählt wird als der Innenrohrdruck (P20).

17. Verfahren nach Anspruch 15 oder 16, **dadurch gekennzeichnet, dass** der Außenrohrdruck (P10) von 1 bar bis 10 bar, vorzugsweise von 1 bar bis 5 bar, besonders bevorzugt von 1 bar bis 2 bar, größer gewählt wird als der Innenrohrdruck (P20).

18. Verfahren nach einem der Ansprüche 15 bis 17, **dadurch gekennzeichnet, dass** der absolute Außenrohrdruck (P10) größer als 50 bar, vorzugsweise größer als 90 bar, besonders bevorzugt größer als 100 bar, eingestellt wird.

19. Verfahren nach einem der Ansprüche 15 bis 18, **dadurch gekennzeichnet, dass** ein Rohrleitungssystem (1) bereitgestellt wird mit zumindest einem weiteren, zweiten Innenrohr (30) mit einem im Vergleich zum lichten Außenrohrdurchmesser (12) kleineren, zweiten lichten Innenrohrdurchmesser (32), wobei das weitere, zweite Innenrohr (30) innerhalb des Außenrohres (10) geführt wird und mit einem weiteren, zweiten fluiden Innenrohr-Medium (35) befüllt wird, welches zweite Innenrohr-Medium (35) vorzugsweise Wasserstoff enthält oder Wasserstoff ist, und wobei das zweite Innenrohr-Medium (35) mit einem zweiten Innenrohrdruck (P30) beaufschlagt wird, wobei der Außenrohrdruck (P10) größer gewählt wird als der zweite Innenrohrdruck (P30) im weiteren, zweiten Innenrohr (30).

20. Verfahren nach einem der Ansprüche 15 bis 19, **dadurch gekennzeichnet, dass** das erste Innenrohr (20) und gegebenenfalls das zumindest eine weitere, zweite Innenrohr (30) mit einem für den Transport von Wasserstoff geeigneten Rohrleitungsmaterial zumindest innenseitig beschichtet oder aus einem solchen geeigneten Rohrleitungsmaterial hergestellt wird, wobei das geeignete Rohrleitungsmaterial ausgewählt wird aus der Gruppe umfassend: Austenitischer Stahl, Kompositmaterial mit einer Kohlenstofffaser-Struktur, Kompositmaterial mit einer Kohlenstofffaser-Struktur mit Glasfaser-Verstärkung, Kohlenstofffaserverstärkter Polymerkunststoff, Perfluoralkoxy-Polymer-Kunststoff, Polytetrafluorethylen-Kunststoff, Ethylen-Propylen-Copolymer-Kunststoff.

21. Verfahren nach einem der Ansprüche 15 bis 20, **dadurch gekennzeichnet, dass** als Außenrohr (10) ein Bestandsrohr einer bestehenden Erdgasleitung verwendet wird, wobei innerhalb des Außenrohrs (10) das erste Innenrohr (20) und gegebenenfalls zumindest ein weiteres, zweites Innenrohr (30) geführt wird bzw. werden.

## Claims

1. Pipeline system (1) for transporting hydrogen, comprising an outer pipe (10) having a clear outer pipe diameter (12) and a first inner pipe (20) having a clear inner pipe diameter (22), wherein the first inner pipe (20) has a smaller clear inner pipe diameter (22) compared to the clear outer pipe diameter (12) and is guided inside the outer pipe (10), and wherein the outer pipe (10) contains a fluid outer pipe medium (15) and is subjected to an outer pipe pressure (P10), and wherein the first inner pipe (20) contains a fluid inner pipe medium (25) and is subjected to an inner pipe pressure (P20), wherein the inner pipe medium (25, 35) contains hydrogen or is hydrogen, **characterized in that** the outer pipe pressure (P10) is greater than the inner pipe pressure (P20).

2. Pipeline system (1) according to claim 1, **characterized in that** the outer pipe pressure (P10) is at least 1 bar greater than the inner pipe pressure (P20).

3. Pipeline system (1) according to claim 1 or 2, **characterized in that** the outer pipe pressure (P10) is from 1 bar to 10 bar, preferably from 1 bar to 5 bar, particularly preferably from 1 bar to 2 bar, greater than the inner pipe pressure (P20).

4. Pipeline system (1) according to one of claims 1 to 3,
**characterized in that** the absolute outer pipe pressure (P10) is greater than 50 bar, preferably greater than 90 bar, particularly preferably greater than 100 bar.

5. Pipeline system (1) according to one of claims 1 to 4,
**characterized in that** the first inner pipe (20) is guided parallel with the outer pipe (10), preferably concentrically with the outer pipe (20).

6. Pipeline system (1) according to one of claims 1 to 5, comprising at least one further, second inner pipe (30), **characterized in that** the at least one further, second inner pipe (30) is guided inside the outer pipe (10) with a second clear inner pipe diameter (32) which is smaller than the clear outer pipe diameter (12), wherein the further, second inner pipe (30) contains a further fluid inner pipe medium (35) and is subjected to a second inner pipe pressure (P30), wherein the outer pipe pressure (P10) is greater than the second inner pipe pressure (P30) in the further, second inner pipe (30).

7. Pipeline system (1) according to claim 6, **characterized in that** the at least one further, second inner pipe (30) is guided parallel to the first inner pipe (20).

8. Pipeline system (1) according to claim 6 or 7, **characterized in that** the fluid inner pipe medium (35) transported in the further, second inner pipe (30) contains hydrogen or is hydrogen.

9. Pipeline system (1) according to one of claims 1 to 8,
**characterized in that** the first inner pipe (20) and optionally the at least one further, second inner pipe (30) is coated at least on the inside with a piping material suitable for the transport of hydrogen or is made of such a suitable piping material, wherein the suitable piping material is selected from the group comprising: austenitic steel, composite material with a carbon fiber structure, composite material with a carbon fiber structure with glass fiber reinforcement, carbon fiber-reinforced polymer plastic, perfluoroalkoxy polymer plastic, polytetrafluoroethylene plastic, ethylene-propylene copolymer plastic.

10. Pipeline system (1) according to one of claims 1 to 9,
**characterized in that** the outer pipe medium (15) contains or is a buffer gas or inert protective gas.

11. Pipeline system (1) according to one of claims 1 to 10, **characterized in that** the outer pipe (10) is an existing pipe of an existing natural gas pipeline, within which the first inner pipe (20) and optionally at least one further, second inner pipe (30) is or are guided.

12. Pipeline system according to one of claims 1 to 11, **characterized in that** the at least one inner pipe medium (25, 35) flows in the at least one inner pipe (20, 30) at a greater flow velocity than the outer pipe medium (15) in the outer pipe (10).

13. Pipeline system according to claim 12, **characterized in that** the at least one inner pipe medium (25) flows in the same flow direction (26) as the flow direction (16) of the outer pipe medium (15) .

14. Pipeline system according to claim 12, **characterized in that** the at least one inner pipe medium (25) flows in the opposite flow direction (26) to the flow direction (16) of the outer pipe medium (15) .

15. Method for transporting hydrogen, the method comprising the following steps of:
- providing a pipeline system (1) comprising an outer pipe (10) having a clear outer pipe diameter (12) and a first inner pipe (20) having a clear inner pipe diameter (22), wherein the first inner pipe (20) has a smaller clear inner pipe diameter (22) compared to the clear outer pipe diameter (12) and is guided inside the outer pipe (10);
- filling the outer pipe (10) with a fluid outer pipe medium (15), wherein the outer pipe (10) is subjected to an outer pipe pressure (P10);
- filling the first inner pipe (20) with a fluid inner pipe medium (25), wherein the inner pipe medium (25) contains hydrogen or is hydrogen, and wherein the inner pipe medium (25) is subjected to an inner pipe pressure (P20);
- setting a pressure difference, wherein the outer pipe pressure (P10) is selected to be greater than the inner pipe pressure (P20) in the first inner pipe (20).

16. Method according to claim 15, **characterized in that** the outer pipe pressure (P10) is selected to be at least 1 bar greater than the inner pipe pressure (P20).

17. Method according to claim 15 or 16, **characterized in that** the outer pipe pressure (P10) is selected to be from 1 bar to 10 bar, preferably from 1 bar to 5 bar, particularly preferably from 1 bar to 2 bar, greater than the inner pipe pressure (P20).

18. Method according to one of claims 15 to 17, **characterized in that** the absolute outer pipe pressure (P10) is set to greater than 50 bar, preferably greater than 90 bar, particularly preferably greater than 100 bar.

19. Method according to one of claims 15 to 18, **characterized in that** a pipeline system (1) is provided comprising at least one further, second inner pipe (30) having a second clear inner pipe diameter (32) which is smaller in comparison with the clear outer pipe diameter (12), wherein the further, second inner pipe (30) is guided inside the outer pipe (10) and is filled with a further, second fluid inner pipe medium (35), which second inner pipe medium (35) preferably contains hydrogen or is hydrogen, and wherein the second inner pipe medium (35) is subjected to a second inner pipe pressure (35), wherein the outer pipe pressure (P10) is selected to be greater than the second inner pipe pressure (P30) in the further, second inner pipe (30).

20. Method according to one of claims 15 to 19, **characterized in that** the first inner pipe (20) and optionally the at least one further, second inner pipe (30) is coated at least on the inside with a piping material suitable for the transport of hydrogen or is produced from such a suitable piping material, wherein the suitable piping material is selected from the group comprising: austenitic steel, composite material with a carbon fiber structure, composite material with a carbon fiber structure with glass fiber reinforcement, carbon fiber-reinforced polymer plastic, perfluoroalkoxy polymer plastic, polytetrafluoroethylene plastic, ethylene-propylene copolymer plastic.

21. Method according to one of claims 15 to 20, **characterized in that** an existing pipe of an existing natural gas pipeline is used as the outer pipe (10), wherein the first inner pipe (20) and optionally at least one further, second inner pipe (30) is/are guided inside the outer pipe (10).

## Revendications

1. Circuit de tuyauterie (1) pour le transport d'hydrogène, comprenant un tuyau extérieur (10) ayant un diamètre de tuyau extérieur ouvert (12) et un premier tuyau intérieur (20) ayant un diamètre de tuyau intérieur ouvert (22), dans lequel le premier tuyau intérieur (20) a un diamètre de tuyau intérieur ouvert (22) plus petit que le diamètre de tuyau extérieur ouvert (12) et est passé à l'intérieur du tuyau extérieur (10), et dans lequel le tuyau extérieur (10) contient une substance contenue dans le tuyau extérieur fluide (15) et se trouve sous une pression dans le tuyau extérieur (P10), et dans lequel le premier tuyau intérieur (20) contient une substance contenue dans le tuyau intérieur fluide (25) et se trouve sous une pression dans le tuyau intérieur (P20), la substance contenue dans le tuyau intérieur (25, 35) contenant de l'hydrogène ou étant de l'hydrogène, **caractérisé en ce que** la pression dans le tuyau extérieur (P10) est plus élevée que la pression dans le tuyau intérieur (P20).

2. Circuit de tuyauterie (1) selon la revendication 1, **caractérisé en ce que** la pression dans le tuyau extérieur (P10) est supérieure à la pression dans le tuyau intérieur (P20) d'au moins 1 bar.

3. Circuit de tuyauterie (1) selon la revendication 1 ou 2, **caractérisé en ce que** la pression dans le tuyau extérieur (P10) est supérieure à la pression dans le tuyau intérieur (P20) de 1 bar à 10 bars, de préférence de 1 bar à 5 bars, en particulier de 1 bar à 2 bars.

4. Circuit de tuyauterie (1) selon l'une des revendications 1 à 3, **caractérisé en ce que** la pression dans le tuyau extérieur (P10) absolue est supérieure à 50 bars, de préférence supérieure à 90 bars, en particulier supérieure à 100 bars.

5. Circuit de tuyauterie (1) selon l'une des revendications 1 à 4, **caractérisé en ce que** le premier tuyau intérieur (20) est passé parallèlement au tuyau extérieur (10), de préférence de façon concentrique par rapport au tuyau extérieur (20).

6. Circuit de tuyauterie (1) selon l'une des revendications 1 à 5, comprenant au moins un autre (deuxième) tuyau intérieur (30), **caractérisé en ce que** l'au moins un autre (deuxième) tuyau intérieur (30) ayant un deuxième diamètre de tuyau intérieur ouvert (32) plus petit que le diamètre de tuyau extérieur ouvert (12) est passé à l'intérieur du tuyau extérieur (10), l'autre (deuxième) tuyau intérieur (30) contenant une autre substance contenue dans le tuyau intérieur (35) fluide et se trouvant sous une deuxième pression dans le tuyau intérieur (P30), la pression dans le tuyau extérieur (P10) étant supérieure à la deuxième pression dans le tuyau intérieur (P30) dans l'autre (deuxième) tuyau intérieur (30).

7. Circuit de tuyauterie (1) selon la revendication 6, **caractérisé en ce que** l'au moins un autre (deuxième) tuyau intérieur (30) est passé parallèlement au premier tuyau intérieur (20).

8. Circuit de tuyauterie (1) selon la revendication 6 ou 7, **caractérisé en ce que** la substance contenue dans le tuyau intérieur (35) fluide transportée dans l'autre (deuxième) tuyau intérieur (30) contient de l'hydrogène ou est de l'hydrogène.

9. Circuit de tuyauterie (1) selon l'une des revendications 1 à 8, **caractérisé en ce que** le premier tuyau intérieur (20) et, le cas échéant, l'au moins un autre (deuxième) tuyau intérieur (30) sont au moins revêtus sur l'intérieur d'un matériau de tuyauterie convenant pour le transport de l'hydrogène ou fabriqués dans un tel matériau de tuyauterie approprié, le matériau de tuyauterie approprié étant choisi parmi le groupe comprenant : acier austénitique, matériau composite à structure en fibres de carbone, matériau composite à structure en fibres de carbone armée de fibres de verre, polymère synthétique armé de fibres de carbone, matière synthétique à base de polymère perfluoroalkoxy, matière synthétique à base de polytétrafluoroéthylène, matière synthétique à base de copolymère d'éthylène et de propylène.

10. Circuit de tuyauterie (1) selon l'une des revendications 1 à 9, **caractérisé en ce que** la substance contenue dans le tuyau extérieur (15) contient ou est un gaz de tampon ou un gaz protecteur inerte.

11. Circuit de tuyauterie (1) selon l'une des revendications 1 à 10, **caractérisé en ce que** le tuyau extérieur (10) est un tuyau principal d'une conduite de gaz naturel existante, à l'intérieur de laquelle le premier tuyau intérieur (20) et, le cas échéant, au moins un autre (deuxième) tuyau intérieur (30) sont passés.

12. Circuit de tuyauterie selon l'une des revendications 1 à 11, **caractérisé en ce que** l'au moins une substance contenue dans le tuyau intérieur (25, 35) circule dans l'au moins un tuyau intérieur (20, 30) à une plus grande vitesse d'écoulement que la substance contenue dans le tuyau extérieur (15) dans le tuyau extérieur (10).

13. Circuit de tuyauterie selon la revendication 12, **caractérisé en ce que** l'au moins une substance contenue dans le tuyau intérieur (25) circule dans le même sens de circulation (26) que le sens de circulation (16) de la substance contenue dans le tuyau extérieur (15).

14. Circuit de tuyauterie selon la revendication 12, **caractérisé en ce que** l'au moins une substance contenue dans le tuyau intérieur (25) circule dans un sens de circulation (26) opposé au sens de circulation (16) de la substance contenue dans le tuyau extérieur (15).

15. Procédé pour le transport d'hydrogène, lequel procédé comprend les étapes suivantes :
- préparation d'un circuit de tuyauterie (1) comprenant un tuyau extérieur (10) ayant un diamètre de tuyau extérieur ouvert (12) et un premier tuyau intérieur (20) ayant un diamètre de tuyau intérieur ouvert (22), le premier tuyau intérieur (20) ayant un diamètre de tuyau intérieur ouvert (22) plus petit que le diamètre de tuyau extérieur ouvert (12) et étant passé à l'intérieur du tuyau extérieur (10) ;
- remplissage du tuyau extérieur (10) avec une substance contenue dans le tuyau extérieur (15) fluide, le tuyau extérieur (10) étant amené à une pression dans le tuyau extérieur (P10) ;
- remplissage du premier tuyau intérieur (20) avec une substance contenue dans le tuyau intérieur (25) fluide, laquelle substance contenue dans le tuyau intérieur (25) contient de l'hydrogène ou est de l'hydrogène, et la substance contenue dans le tuyau intérieur (25) étant amenée à une pression dans le tuyau intérieur (P20) ;
- ajustement d'une différence de pression, la pression dans le tuyau extérieur (P10) étant choisie supérieure à la pression dans le tuyau intérieur (P20) dans le premier tuyau intérieur (20).

16. Procédé selon la revendication 15, **caractérisé en ce que** la pression dans le tuyau extérieur (P10) est choisie supérieure d'au moins 1 bar à la pression dans le tuyau intérieur (P20).

17. Procédé selon la revendication 15 ou 16, **caractérisé en ce que** la pression dans le tuyau extérieur (P10) est choisie supérieure à la pression dans le tuyau intérieur (P20) de 1 bar à 10 bars, de préférence de 1 bar à 5 bars, en particulier de 1 bar à 2 bars.

18. Procédé selon l'une des revendications 15 à 17, **caractérisé en ce que** la pression dans le tuyau extérieur (P10) absolue est réglée supérieure à 50 bars, de préférence supérieure à 90 bars, en particulier supérieure à 100 bars.

19. Procédé selon l'une des revendications 15 à 18, **caractérisé en ce qu'**est préparé un circuit de tuyauterie (1) comprenant au moins un autre (deuxième) tuyau intérieur (30) avec un deuxième diamètre de tuyau intérieur ouvert (32) plus petit que le diamètre de tuyau extérieur ouvert (12), lequel autre (deuxième) tuyau intérieur (30) est passé à l'intérieur du tuyau extérieur (10) et rempli avec une autre (deuxième) substance contenue dans le tuyau intérieur (35) fluide, la deuxième substance contenue dans le tuyau intérieur (35) contenant de préférence de l'hydrogène ou est de l'hydrogène et la deuxième substance contenue dans le tuyau intérieur (35) étant amenée à une deuxième pression dans le tuyau intérieur (P30), la pression dans le tuyau extérieur (P10) étant choisie supérieure à la deuxième pression dans le tuyau intérieur (P30) dans l'autre (deuxième) tuyau intérieur (30).

20. Procédé selon l'une des revendications 15 à 19, **caractérisé en ce que** le premier tuyau intérieur (20) et, le cas échéant, l'au moins un autre (deuxième) tuyau intérieur (30) sont au moins revêtus sur l'intérieur d'un matériau de tuyauterie convenant pour le transport de l'hydrogène ou fabriqués dans un tel matériau de tuyauterie approprié, le matériau de tuyauterie approprié étant choisi parmi le groupe comprenant : acier austénitique, matériau composite à structure en fibres de carbone, matériau composite à structure en fibres de carbone armée de fibres de verre, polymère synthétique armé de fibres de carbone, matière synthétique à base de polymère perfluoroalkoxy, matière synthétique à base de polytétrafluoroéthylène, matière synthétique à base de copolymère d'éthylène et de propylène.

21. Procédé selon l'une des revendications 15 à 20, **caractérisé en ce que** le tuyau extérieur (10) est un tuyau principal d'une conduite de gaz naturel existante, le premier tuyau intérieur (20) et, le cas échéant, au moins un autre (deuxième) tuyau intérieur (30) sont passés étant passés à l'intérieur du tuyau extérieur (10).
